Europäisches Patentamt

(19) European Patent Office

Office européen des brevets

(11) Veröffentlichungsnummer: **0 023 010**
**B1**

(12) **EUROPÄISCHE PATENTSCHRIFT**

(45) Veröffentlichungstag der Patentschrift:
**19.10.83**

(21) Anmeldenummer: **80104087.4**

(22) Anmeldetag: **15.07.80**

(51) Int. Cl.³: **G 21 C 19/06**

(54) **Brennelementlagerbecken für kerntechnische Anlagen.**

(30) Priorität: **19.07.79 DE 2929200**

(43) Veröffentlichungstag der Anmeldung:
**28.01.81 Patentblatt 81/4**

(45) Bekanntmachung des Hinweises auf die Patenterteilung:
**19.10.83 Patentblatt 83/42**

(84) Benannte Vertragsstaaten:
**AT CH FR IT LI**

(56) Entgegenhaltungen:
**DE-A-2 034 087**
**DE-A-2 063 829**
**DE-A-2 731 035**

(73) Patentinhaber: **BROWN BOVERI REAKTOR GmbH,
Dudenstrasse 44, D-6800 Mannheim 1 (DE)**

(72) Erfinder: **Hennings, Uwe, Dipl.-Ing., Ortsstrasse 24,
D-6940 Weinheim (DE)**

BUNDESDRUCKEREI BERLIN

Brennelementlagerbecken für kerntechnische Anlagen

Die Erfindung betrifft ein Brennelementlagerbecken für kerntechnische Anlagen mit einer Wasserfüllung unterschiedlicher Höhe, wobei sich an den Berührungsstellen des Wasserspiegels mit der Beckenwand bevorzugt strahlende Partikel niederschlagen.

Diese strahlenden Partikel bestehen vornehmlich aus radioaktivem Cäsium, das aus defekten Brennstäben in das Beckenwasser gelangt. Eine Reinigung des Wassers von den radioaktiven Bestandteilen ist aufwendig und auch nur begrenzt wirksam, da ein großer Teil dieser Bestandteile in Höhe des Wasserspiegels an der Beckenwandung abgelagert ist. Durch die Ansammlung der strahlenden Partikel an der Beckenwand erhöht sich die Strahlenbelastung des Personals bei Arbeiten am Brennelementlagerbecken.

Zur Verringerung der Strahlenbelastung im Beckenbereich wurde daher in der DE-A- 2 731 035 vorgeschlagen, eine über den Wasserspiegel reichende und sich parallel zu diesem erstreckende Abschirmplatte vorzusehen.

Unter der Abschirmplatte ist weiterhin eine gegen den Beckenrand gerichtete Sprüheinrichtung angeordnet.

Mit dieser Anordnung wird die Strahlenbelastung zwar reduziert; es tritt jedoch der Nachteil auf, daß durch die vorspringenden Abschirmplatten die Manipulierfähigkeit der im Lagerbecken angeordneten Brennelemente beeinträchtigt wird. Außerdem verteuern die mindestens 50 mm starken Stahlplatten und die Sprüheinrichtung die kerntechnische Anlage nicht unerheblich.

Die Erfindung stellt sich daher die Aufgabe mit einfachen Mitteln den Anteil der von der Beckenwand ausgehenden Strahlung zu verringern.

Gelöst wird die Aufgabe erfindungsgemäß dadurch, daß die Beckenwand im Bereich der Berührungsstellen des Wasserspiegels mit einer zusätzlichen, zum Zwecke der Dekontamination entfernbaren Blechverkleidung versehen ist.

Diese Ausbildung hat den Vorteil, daß die nach einer bestimmten Einsatzzeit kontaminierte Blechverkleidung zum Zwecke der Dekontamination oder der Abschirmung auf eine Position unterhalb des Wasserspiegels abgesenkt werden kann. Nach erfolgter Dekontamination (gefahrlos, da unter Wasser stattfindend) steht die Blechverkleidung zum erneuten Einsatz zur Verfügung.

Zur besseren Hantierung der Blechverkleidung besteht sie vorzugsweise aus einzelnen, schürzenartig angebrachten Blechen, wobei die Bleche über ihre sich parallel zur Beckenwand erstreckenden Pratzen in Wandhaken eingehängt sind.

In vorteilhafter Weise sind die Pratzen nur an der schrägen Berührungsfläche der Wandhaken und an der Beckenwand abgestützt. Damit wird sichergestellt, daß die Bleche satt an der Beckenwand anliegen, so daß sich zwischen der Beckenwand und den Blechen kein Wasser sammeln kann.

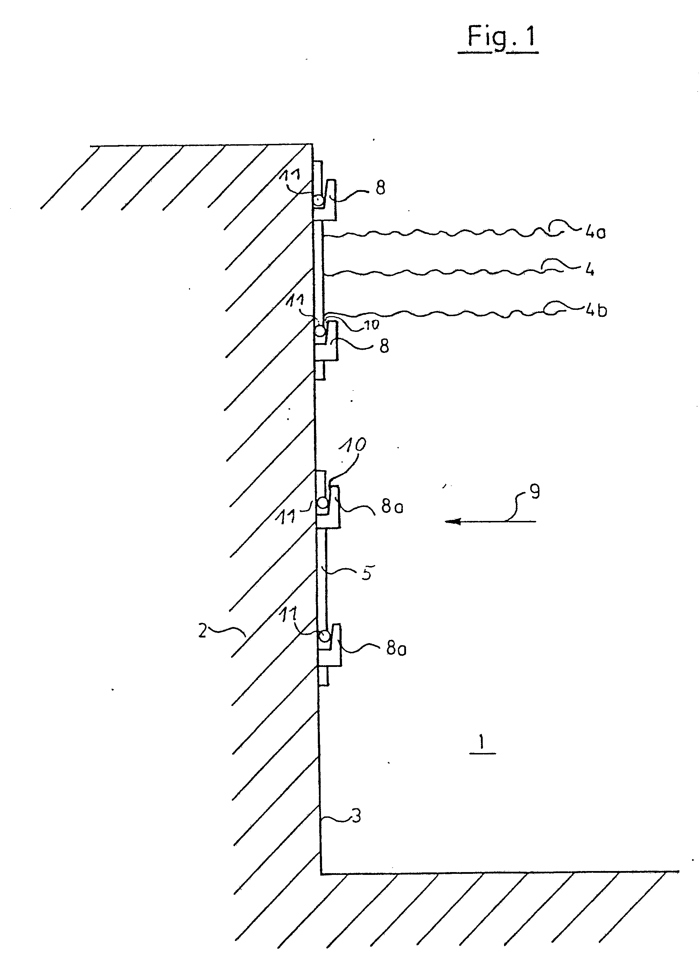

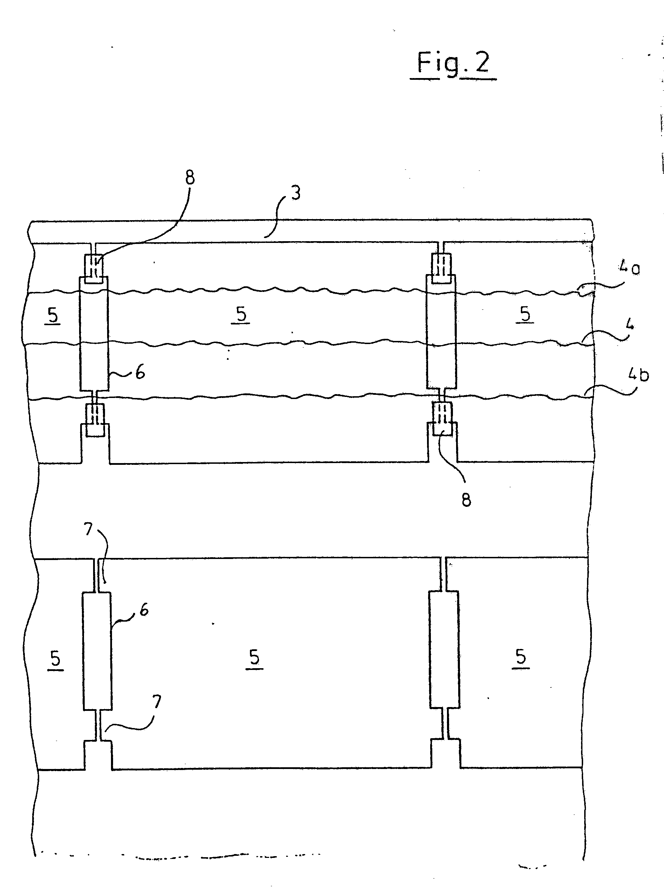

Zur näheren Erläuterung der Erfindung wird anhand der schematischen Zeichnung Fig. 1 und 2 ein Ausführungsbeispiel beschrieben.

Die Fig. 1 zeigt den Teilbereich eines Lagerbeckens 1 für abgebrannte Brennelemente. Das Lagerbecken ist in einer Betonstruktur 2 eines nicht dargestellten Kernkraftwerkes oder einer sonstigen kerntechnischen Anlage angeordnet. Boden und Wände der Betonkonstruktion sind mit einer Blechauskleidung 3 versehen. Das Lagerbecken 1 ist bis zur Höhe 4 mit Wasser gefüllt, wobei der Wasserspiegel durch Regeleingriffe zwischen einem Höchststand 4a und einem Niedrigsstand 4b schwanken kann. Im Bereich dieser Wasserspiegelschwankungen setzen sich an der mit einer Blechauskleidung 3 versehenen Beckenwand bevorzugt strahlende Partikel ab. Damit es nun überhaupt nicht zu derartigen Ablagerungen kommt, wird der Bereich der Berührungsstellen des Wasserspiegels mit der Beckenwand mit einer umlaufenden Blechschürze versehen. Die einzelnen Bleche 5 der Blechschürze sind ca. 1 bis 2 Meter lang und somit leicht zu handhaben. Wie aus der Fig. 2, die eine Ansicht der Fig. 1 in Pfeilrichtung 9 darstellt, zu ersehen ist, weisen die Bleche 5 an ihren freien Enden 6 je zwei Pratzen 7 auf, die zu ihrer Aufhängung an den Wandhaken 8 dienen und mit einer Verstärkung 11 versehen sind. Die nach oben offenen Wandhaken weisen eine schräg nach unten zulaufende Fläche 10 auf. Dabei ist die Schräge so ausgebildet, daß die eingehängten Bleche mit den Verstärkungen 11 ihrer Pratzen 7 nur die Beckenwand und diese Schräge berühren. Somit kommen die Bleche 5 zum satten Anliegen an der Beckenwand und verhindern eine Wasseransammlung zwischen diesen Bauteilen. Sobald sich Personal in der Nähe des Beckens aufhalten muß, werden die kontaminierten Bleche 5 unterhalb des Wasserspiegels in die Wandhaken 8a eingehängt, die aus Gründen der besseren Übersicht in der Fig. 2 weggelassen werden.

Gegebenenfalls können die Bleche auch am Beckenboden abgelegt werden. Die Bleche 5 befinden sich dann jeweils soweit unter dem Wasserspiegel, daß eine wirksame Abschirmung gegeben ist. Nachdem die Bleche unterhalb der schützenden Wasserschicht in an sich bekannter Weise und für das Personal gefahrlos gereinigt sind, werden sie wieder in die Wandhaken 8 eingehängt. Sind die Aufenthaltszeiten des Personals länger als die Zeit, während der die Blechschürze erneut kontaminiert ist, so kann der Auswechsel- und Reinigungsvorgang wiederholt ablaufen. Die einzelnen Bleche 5 der Schürze werden mit nicht dargestellten Tragmitteln, wie Seile, Ketten oder Stangen aus den Wandhaken 8, 8a heraus- und in sie hineingehoben.

## Patentansprüche

1. Brennelementlagerbecken für kerntechnische Anlagen mit einer Wasserfüllung unterschiedlicher Höhe, wobei sich an den Berührungsstellen des Wasserspiegels mit der Beckenwand bevorzugt strahlende Partikel niederschlagen, dadurch gekennzeichnet, daß die Beckenwand (3) im Bereich der Berührungsstellen (4, 4a, 4b) des Wasserspiegels mit einer zusätzlichen, zum Zwecke der Dekontamination entfernbaren Blechverkleidung (5) versehen ist.

2. Brennelementlagerbecken nach Anspruch 1, dadurch gekennzeichnet, daß die Blechverkleidung aus einzelnen, schürzenartig angebrachten Blechen (5) besteht, die über ihre sich parallel zur Beckenwand erstreckenden Pratzen (7) in Wandhaken (8, 8a) eingehängt sind.

3. Brennelementlagerbecken nach Anspruch 2, dadurch gekennzeichnet, daß die Pratzen (7) nur an der schräg verlaufenden Fläche (10) der Wandhaken (8, 8a) und an der Beckenwand abgestützt sind.

## Claims

1. A fuel storage pool for nuclear installations filled with water to different levels where accumulations of radiating particles occur especially at the contact points between water surface and pool wall, characterized in that the pool wall (3) is fitted with an additional removable sheet metal lining (5) in the region of the contact points (4, 4a, 4b) of the water surface.

2. A fuel storage pool according to claim 1, characterized in that the sheet metal lining consists of separate sheets (5) arranged like a skirt and suspended from wall hooks (8, 8a) parallel to the pool wall by means of their claws (7).

3. A fuel storage pool acc. to claim 2, characterized in that the claws (7) are supported only by the slanted face (10) of the walls hooks (8, 8a) and by the pool wall.

## Revendications

1. Bassin de stockage d'éléments combustibles pour installations nucléaires, ayant un remplissage d'eau d'une hauteur différente, des particules de préférence rayonnantes se déposant sur les endroits de contact du niveau d'eau avec la paroi du bassin, caractérisé en ce que la paroi de bassin (3) est munie au voisinage des endroits de contact (4, 4a, 4b) du niveau d'eau d'un garnissage de tôles (5) additionnel qu'on peut éloigner à des fins de décontamination.

2. Bassin de stockage d'éléments combustibles selon la revendication 1, caractérisé en ce que le garnissage de tôle est constitué par des tôles individuelles (5) disposées en forme de tabliers et qui sont suspendues par l'intermédiaire de leurs griffes (7) s'étendant parallèlement à la paroi du bassin dans des crochets de parois (8, 8a).

3. Bassin de stockage d'éléments combustibles selon la revendication 2, caractérisé en ce que les griffes (7) ne reposent que sur la surface (10) s'étendant en oblique des crochets de parois (8, 8a) et sur la paroi de bassin.

<u>Fig. 1</u>

Fig. 2